(19) Europäisches Patentamt / European Patent Office / Office européen des brevets

(11) EP 1 063 540 B1

(12) # EUROPÄISCHE PATENTSCHRIFT

(45) Veröffentlichungstag und Bekanntmachung des Hinweises auf die Patenterteilung:
**17.11.2010 Patentblatt 2010/46**

(51) Int Cl.:
***G02B 1/10*** *(2006.01)* ***G02B 1/04*** *(2006.01)*
***C08J 7/04*** *(2006.01)*

(21) Anmeldenummer: **00111955.1**

(22) Anmeldetag: **16.06.2000**

(54) **Optische Linse sowie Verfahren zu deren Herstellung**

Optical lenses and process for manufacturing them

Lentilles optiques et procédé pour leur fabrication

(84) Benannte Vertragsstaaten:
**AT BE CH CY DE DK ES FI FR GB GR IE IT LI LU MC NL PT SE**

(30) Priorität: **24.06.1999 DE 19928888**

(43) Veröffentlichungstag der Anmeldung:
**27.12.2000 Patentblatt 2000/52**

(73) Patentinhaber: **Barberini GmbH**
**86633 Neuburg an der Donau (DE)**

(72) Erfinder:
- **Walther, Marten, Dr.**
  **55270 Engelstadt (DE)**
- **Spallek, Michael, Dr.**
  **55218 Ingelheim (DE)**
- **Borens, Manfred**
  **55126 Mainz (DE)**
- **Möhl, Wolfgang, Dr.**
  **67550 Worms (DE)**
- **Kuhr, Markus, Dr.**
  **55579 Wöllstein (DE)**

(74) Vertreter: **Luderschmidt, Schüler & Partner**
**Patentanwälte**
**John-F.-Kennedy-Strasse 4**
**65189 Wiesbaden (DE)**

(56) Entgegenhaltungen:
**EP-A- 0 152 256 EP-A- 0 407 870**

- **PATENT ABSTRACTS OF JAPAN vol. 018, no. 688 (P-1849), 26. Dezember 1994 (1994-12-26) & JP 06 273701 A (JAPAN SYNTHETIC RUBBER CO LTD), 30. September 1994 (1994-09-30)**
- **PATENT ABSTRACTS OF JAPAN vol. 017, no. 681 (P-1660), 14. Dezember 1993 (1993-12-14) & JP 05 225613 A (TDK CORP), 3. September 1993 (1993-09-03)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 063 540 B1

Printed by Jouve, 75001 PARIS (FR)

**Beschreibung**

Die vorliegende Erfindung betrifft optische, vorzugsweise ophthalmische Linsen, mit einem Körper aus Kunststoff, insbesondere für Brillengläser sowie Verfahren zu deren Herstellung.

Als Materialien für optische Linsen, insbesonders Brillenlinsen, werden traditionell optische Spezialgläser eingesetzt. Hierbei stehen eine ganze Reihe von optischen Glassorten mit unterschiedlichen optischen Eigenschaften zur Verfügung. Details sind in den Übersichtsartikeln von T. Jarratt (Optical World, May 1998, S. 10 - 27 und Optical World, March 1998, S. 10 - 23) zusammengefaßt.

Um dicke Randbereiche von Brillengläsern zu vermeiden, wurden spezielle Glastypen entwickelt, die höhere Brechungsindizes aufweisen. Bei vorgegebenen optischen Stärken ermöglichen diese Typen, daß die Gläser dünner gestaltet werden können. Um leichtere Brillenlinsen zu realisieren, werden in neuerer Zeit auch Kunststoffe für Ophthalmikanwendungen eingesetzt.

Die Vor- und Nachteile von mineralischen Gläsern gegenüber Kunststoffgläsern sind von A. Asseraf (Optical World November 1997, Seite 12 - 15) sowie von Richard Chaffin (Optical World Februar 1997, Seite 35 - 38) ausführlich beschrieben worden. Vorteilhaft ist bei Kunststoffen insbesondere die hohe mechanische Stabilität und das geringe spezifische Gewicht.

Als Kunststoffe für optische Linsen, insbesonders Brillenlinsen, werden bisher insbesondere Polycarbonate, Polyurethane und spezielle Kunststoffe, wie beispielsweise CR 39, sowie deren Modifikationen eingesetzt. Hierbei ist neben den optische Qualitäten dieser Kunststoffe auch ihre Resistenz gegen Chemikalien, wie beispielsweise Reinigungsmitteln, sowie ihre Kratzfestigkeit entscheidend.

CR 39, ein Copolymer aus Diethylenglycol und Bisallylcarbonat, ist ein spezieller Kunststoff für optische Linsen, insbesonders Brillengläser, der gute optische Eigenschaften aufweist. Der Brechungsindex beträgt 1,498 bei einer Abbezahl von 58. Die Abbezahl ist eine sehr wichtige Materialeigenschaft, da sie die optische Dispersion beschreibt. Nur bei Abbezahlen größer als 40 wird der Brillenträger normalerweise keine störenden Farbringe beobachten.

CR 39 weist jedoch mit 1,32 g/cm$^3$ eine recht hohe Dichte auf, was sich insbesondere bei Glasstärken bis - 6 Dioptrien in einem hohen Gewicht bemerkbar macht. Ebenfalls nachteilig an CR 39 ist die Verarbeitbarkeit. CR 39 muß durch ein für nicht-thermoplastische Kunststoffe typisches Gießverfahren und anschließender UV-Aushärtung hergestellt werden. Hierzu wird das Gießharz in eine Form, die aus zwei geschliffenen Silicatgläsern besteht, die von einem Ring zusammengehalten werden, eingegossen und anschließend durch UV-Licht ausgehärtet.

Polycarbonat als Kunststoff für Brillengläser weist mit einer Dichte von 1,20 g/cm$^3$ und einem Brechungsindex von 1,568 Vorteile gegenüber CR 39 auf. So weist beispielsweise eine runde Linse mit einem Durchmesser von 55 mm und einer Stärke von -8 Dioptrien aus Polycarbonat ein Gewicht von 12,0 g auf. Demgegenüber hat eine Linse mit einer identischen Stärke aus CR 39 ein Gewicht von 15,8 g. Allerdings ist die Abbezahl von nur 30,0 ein wesentlicher Nachteil von Polycarbonat, so daß die Anwendung von Polycarbonat erheblich eingeschränkt ist.

Dementsprechend sind thermoplastische Kunststoffe notwendig, die eine Dichte kleiner als 1,20 g/cm$^3$, einen Brechungsindex größer als 1,500 und eine Abbezahl über 40 aufweisen, um die Anforderungen an Brillenlinsen zu erfüllen.

Aus EP 047 870 A2 sind Materialien mit einem Brechungsindex zwischen 1,520 und 1,545 bekannt, die auch für optische Anwendungen eingesetzt werden können. Allerdings handelt es sich ausschließlich um Anwendungen, bei denen Öl- und Fettbeständigkeit keine Rolle spielt. Dieser Nachteil schließt die Verwendung als Kunststoff für Brillenlinsen völlig aus, da ein Kontakt mit fetthaltigem Handschweiß, fetthaltigen Hautpflegemitteln, lösungsmittelhaltigen Reinigungsmitteln (Ethanol, Propanol, u.ä.) etc. nicht ausgeschlossen werden kann.

Ebenso befindet sich eine Beschreibung dieser Kunststoffe für optische Anwendungen in EP 0 485 893 Al auf Seite 11, Zeile 35 - 43 sowie in EP 0 610 851 Bl. Ein ähnliches Material ist in JP 90009619-B (02.03.90), Nippon Zeon, beschrieben. Auch diese Materialien sind aufgrund der ungenügenden Fettbeständigkeit nicht für ophthalmische Anwendungen geeignet.

Weitere Kunststoffe mit einer Dichte von weniger als 1,2 g/cm$^3$ sind die bekannten Polyolefine, Polyethylen, Polypropylen und deren Copolymere. Diese Materialien sind jedoch teilkristalline Materialien und weisen deshalb keine für Ophthalmikanwendungen genügende Transparenz auf.

Poly-4-Methylpenten-1 ("PMP" von Mitsui Petrochemical) wiederum besitzt zwar eine ausreichende Transparenz und eine niedrige Dichte, jedoch reichen die optischen Eigenschaften bei weitem nicht aus, so z.B. liegt der Brechungsindex bei 600 nm mit 1,4655 viel zu niedrig (H. Domininghaus, Die Kunststoffe und ihre Eigenschaften, 1992, Seite 162).

EP 682 061 beschreibt Kunststoffkörper, die cycloolefinische Co-polymere umfassen. Diese Kunststoffkörper können insbesondere zur Herstellung von Linsen oder Brillengläsern dienen. Die Kunststoffkörper umfassen eine Beschichtung, die vorzugsweise einen zweischichtigen Aufbau aufweist. Auf den Kunststoffkörper wird zunächst eine Grundierschicht aufgebracht, die Polyvinylverbindungen oder z. B. Polystyrol oder Propylen-Ethylen-Copolymere umfasst. Auf die Grundierschicht wird anschließend eine harte Beschichtung ("silicon hardcoating") aufgetragen. Vorzugsweise wird diese Beschichtung aus einer Dispersion erzeugt, die unterschiedliche Silane sowie kolloidales Silika umfasst.

Die Publikation K. Inomata *Open air deposition of $SiO_2$ film from cold plasma torch of tetramethoxysilane-$H_2$-Ar system* beschreibt die Beschichtung von Substraten nach einen CVD-Verfahren unter Verwendung von Tetramethoxysilan.

In Anbetracht des hierin angegebenen und diskutierten Standes der Technik war es Aufgabe der vorliegenden Erfindung, optische Linsen, insbesonders ophthalmische Linsen, mit einem Körper aus Kunststoff bereitzustellen, die hervorragende optische Eigenschaften aufweisen.

Des weiteren soll sich der zur Herstellung der erfindungsgemäßen Linse eingesetzte Kunststoff nach thermoplastischen Verfahren formen lassen.

Eine weitere Aufgabe der Erfindung bestand darin, eine Linse zur Verfügung zu stellen, deren Gewicht bei einer vorgegebenen Dioptrie möglichst gering ist.

Darüber hinaus sollten die Linsen gegen Schweiß, Fette, Lösungsmittel in Reinigungssubstanzen usw. beständig sein.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch eine optische Linse mit allen Merkmalen des Anspruchs 1.

Zweckmäßige Abwandlungen der erfindungsgemäßen Linse werden in den auf Anspruch 1 rückbezogenen Unteransprüchen unter Schutz gestellt. Die Lösung der Aufgabe hinsichtlich des Verfahrens zur Herstellung einer Linse wird durch den Gegenstand des Anspruchs 4 zur Verfügung gestellt.

Dadurch, dass der Kunststoff cycloolefinische Polymere umfasst und der Kunststoffkörper mit einer transparenten gegen Korrosion beständigen Beschichtung überzogen ist, die mindestens zwei Schichten, nämlich eine zum Kunststoff hin gewandte innere Anpassschicht und eine Fettschutzschicht, aufweist, wobei

- ■ die Anpassschicht direkt auf dem Kunststoffkörper angeordnet ist,
- ■ die Anpassschicht eine Dicke von mindestens 500 nm aufweist,
- ■ die Fettschutzschicht eine Dicke von mindestens 100 nm aufweist,
- ■ die Fettschutzschicht $SiO_2$-Einheite und ggf. Silikonharzeinheiten umfasst und einen Kohlenstoffgehalt kleiner 5 Gew. % aufweist,
- ■ die Anpassschicht Silikonharzeinheiten und ggf. $SiO_2$-Einheiten umfasst und mindestens 5 Gew. % Kohlenstoff aufweist,
- ■ wobei die Fettschutzschicht und die Anpassschicht durch ein CVD-Verfahren erhalten wurden, bei welchem man eine Mischung aus Hexamethyldisiloxan und Sauerstoff zur Beschichtung einsetzt,

wird eine optische, insbesonders ophthalmische Linse mit einem Körper aus Kunststoff, insbesondere für Brillengläser, zur Verfügung gestellt, die sowohl hervorragende optische Eigenschaften als auch eine hohe Beständigkeit gegen Korrosion aufweist.

Durch die erfindungsgemäßen Maßnahmen werden insbesondere folgende Vorteile erzielt:

⇒ Erfindungsgemäße Linsen haben hohe Abbezahlen und hohe Brechungsindizes.

⇒ Die Herstellung von Kunststoffkörpern der erfindungsgemäßen Linsen kann durch einfache thermoplastische Verfahren mit hoher Geschwindigkeit und hoher Automatisierbarkeit, wie beispielsweise Spritzguß, erfolgen.

⇒ Die Linsen der vorliegenden Erfindung sind gegen Fette und Reinigungsmittel, wie beispielsweise Ethanol und Isopropanol, unempfindlich.

⇒ Das Gewicht der erfindungsgemäßen Linsen ist bei vorgegebener Form sehr gering.

⇒ Zur Herstellung der Linsen können an sich bekannte Verfahren eingesetzt werden.

Beim erfindungsgemäßen Gegenstand handelt es sich um eine optische Linse, die überall dort angewendet werden kann, wo optische Linsen einsetzbar sind, z. B. bei Objektiven, Kameras, optischen Geräten oder Brillen.

Besonders bevorzugtes Einsatzgebiet ist die Ophthalmik.

Der erfindungsgemäß zur Herstellung der Linsenkörper zu verwendende Kunststoff weist cycloolefinische Polymere auf. Cycloolefinische Polymere sind im Rahmen der Erfindung Polymere, die unter Verwendung von cyclischen Olefinen, insbesondere von polycyclischen Olefinen erhältlich sind.

Cyclische Olefine umfassen beispielsweise monocyclische Olefine, wie Cyclopenten, Cyclopentadien, Cyclohexen, Cyclohepten, Cycloocten sowie Alkylderivate dieser monocyclischen Olefine mit 1 bis 3 Kohlenstoffatomen, wie

Methyl, Ethyl oder Propyl, wie beispielsweise Methylcyclohexen oder Dimethylcyclohexen, sowie Acrylat- und/oder Methacrylatderivate dieser monocyclischen Verbindungen. Darüber hinaus können auch Cycloalkane mit olefinischen Seitenketten als cyclische Olefine verwendet werden, wie beispielsweise Cyclopentylmethacrylat.

Bevorzugt sind verbrückte, polycyclische Olefinverbindungen. Diese polycyclischen Olefinverbindungen können die Doppelbindung sowohl im Ring aufweisen, es handelt sich hierbei um verbrückte polycyclische Cycloalkene, als auch in Seitenketten. Hierbei handelt es sich um Vinylderivate, Allyloxycarboxyderivate und (Meth)acryloxyderivate von polycyclischen Cycloalkanverbindungen. Diese Verbindungen können des weiteren Alkyl-, Aryl- oder Aralkylsubstituenten aufweisen.

Beispielhafte polycyclische Verbindungen sind, ohne daß hierdurch eine Einschränkung erfolgen soll, Bicyclo [2.2.1]hept-2-en (Norbornen), Bicyclo[2.2.1]hept-2,5-dien (2,5-Norbornadien), Ethylbicyclo[2.2.1]hept-2-en (Ethylnorbornen), Ethylidenbicyclo[2.2.1]hept-2-en (Ethyliden-2-norbornen), Phenylbicyclo[2.2.1]hept-2-en, Bicyclo[4.3.0]nona-3,8-dien, Tricyclo[4.3.0.$1^{2,5}$]-3-decen, Tricyclo[4.3.0.$1^{2,5}$]-3,8-decen-(3,8-dihydrodicyclopentadien), Tricyclo[4.4.0.$1^{2,5}$]-3-undecen, Tetracyclo[4.4.0.$1^{2,5}$,$1^{7}$,$1^{7,10}$] -3-dodecen, Ethyliden-tetracyclo[4.4.0.$1^{2,5}$.$1^{7,10}$]-3-dodecen, Methyloxycarbonyltetracyclo[4.4.0.$1^{2,5}$,$1^{7,10}$]-3-dodecen, Ethyliden-9-ethyltetracyclo[4.4.0.$1^{2,5}$,$1^{7,10}$]-3-dodecen, Pentacyclo[4.7.0.$1^{2,5}$,O,$O^{3,13}$,$1^{9,12}$]-3-pentadecen, Pentacyclo[6.1.$1^{3,6}$.$0^{2,7}$.$0^{9,13}$]-4-pentadecen, Hexacyclo[6.6.1.$1^{3,6}$.$1^{10,13}$.$0^{2,7}$.$0^{9,14}$]-4-heptadecen, Dimethylhexacyclo[6.6.1.$1^{3,6}$.$1^{10,13}$.$0^{2,7}$.$0^{9,14}$]-4-heptadecen, Bis(allyloxycarboxy)tricyclo[4.3.0.$1^{2,5}$]-decan, Bis(methacryloxy)tricyclo[4.3.0.$1^{2,5}$]-decan, Bis(acryloxy)tricyclo[4.3.0.$1^{2,5}$]-decan.

Die cycloolefinischen Polymere werden unter Verwendung von zumindest einer der zuvor beschriebenen cycloolefinischen Verbindungen, insbesondere der polycyclischen Kohlenwasserstoffverbindungen hergestellt. Darüber hinaus können bei der Herstellung der cycloolefinischen Polymere weitere Olefine verwendet werden, die mit den zuvor genannten cycloolefinischen Monomeren copolymerisiert werden können. Hierzu gehören u.a. Ethylen, Propylen, Isopren, Butadien, Methylpenten, Styrol und Vinyltoluol.

Die meisten der zuvor genannten Olefine, insbesondere auch die Cycloolefine und Polycycloolefine, können kommerziell erhalten werden. Darüber hinaus sind viele cyclische und polycyclische Olefine durch Diels-Alder-Additionsreaktionen erhältlich.

Die Herstellung der cycloolefinischen Polymere kann auf bekannte Art und Weise erfolgen, wie dies u.a. in den japanischen Patentschriften 11818/1972, 43412/1983, 1442/1986 und 19761/1987 und den japanischen Offenlegungsschriften Nr. 75700/1975, 129434/1980, 127728/1983, 168708/1985, 271308/1986, 221118/1988 und 180976/1990 und in den Europäischen Patentanmeldungen EP-A-0 6 610 851, EP-A-0 6 485 893, EP-A-0 6 407 870 und EP-A-0 6 688 801 dargestellt ist.

Die cycloolefinischen Polymere können beispielsweise unter Verwendung von Aluminiumverbindungen, Vanadiumverbindungen, Wolframverbindungen oder Borverbindungen als Katalysator in einem Lösungsmittel polymerisiert werden.

Es wird angenommen, daß die Polymerisation je nach den Bedingungen, insbesondere dem eingesetzten Katalysator, unter Ringöffnung oder unter Öffnung der Doppelbindung erfolgen kann.

Darüber hinaus ist es möglich, cycloolefinische Polymere durch radikalische Polymerisation zu erhalten, wobei Licht oder ein Initiator als Radikalbildner verwendet wird. Dies gilt insbesondere für die Acryloylderivate der Cycloolefine und/oder Cycloalkane. Diese Art der Polymerisation kann sowohl in Lösung als auch in Substanz erfolgen.

Zur Herstellung des erfindungsgemäßen Kunststoffmaterials wird besonders bevorzugt ein polycyclisches Olefin der Formel I,II,III oder IV, vorzugsweise ein Cycloolefin der Formeln I oder III,

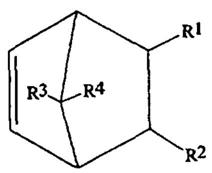

(I)

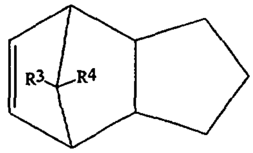

(II)

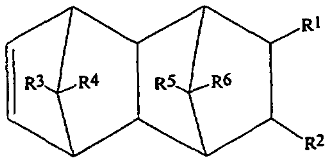

(III)

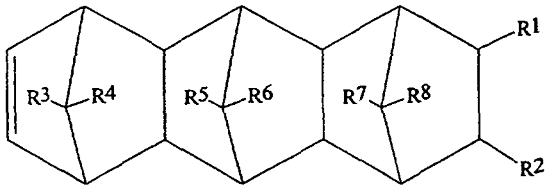

(IV)

worin $R^1$, $R^2$, $R^3$, $R^4$, $R^5$, $R^6$, $R^7$ und $R^8$ gleich oder verschieden sind und ein Wasserstoffatom oder einen $C_1$-$C_8$-Alkylrest bedeuten, wobei gleiche Reste in den verschiedenen Formeln eine unterschiedliche Bedeutung haben können, polymerisiert.

Ggf. wird auch ein monocyclisches Olefin der Formel V,

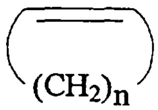

(V)

worin n eine Zahl von 2 bis 10 ist, verwendet. Ein anderes Comonomer ist ein acyclisches 1-Olefin der Formel VI,

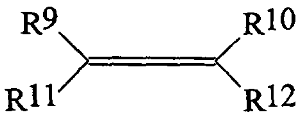

(VI)

worin $R^9$, $R^{10}$, $R^{11}$ und $R^{12}$ gleich oder verschieden sind und ein Wasserstoffatom oder einen $C_1$-$C_8$-Alkylrest bedeuten. Bevorzugt sind Ethylen oder Propylen.

Besonders bevorzugt werden Copolymere von polycyclischen Olefinen der Formel I und III hergestellt. Das polycyclische Olefin (I-IV) wird in einer Menge von 0,1 - 100 Gew.-%, das monocyclische Olefin (V) in einer Menge von 0 - 99 Gew.-% und das acyclische 1-Olefin (VI) in einer Menge von 0 - 99,9 Gew.-% jeweils bezogen auf die Gesamtmenge der Monomeren eingesetzt.

Besonders bevorzugte Katalysatoren bestehen aus einem Aluminoxan der Formeln VII für den linearen Typ

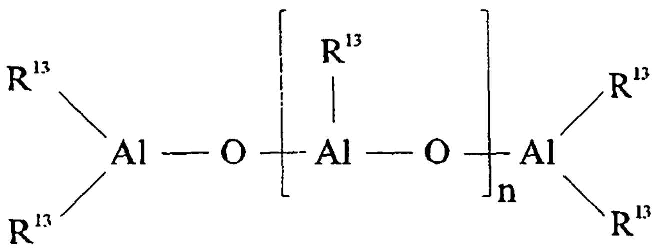

(VII)

und/oder der Formel VIII für cyclischen den Typ

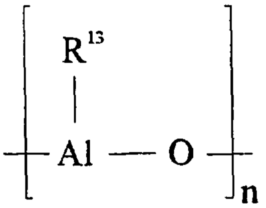

(VIII)

und mindestens einem Metallocen der Formel IX

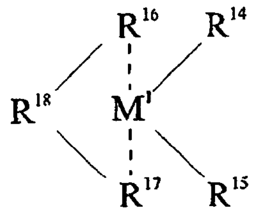

(IX).

In Formel IX ist $M^1$ ein Metall aus der Gruppe Titan, Zirkon, Hafnium, Vanadium, Niob und Tantal, vorzugsweise Zirkon und Hafnium. $R^{14}$ und $R^{15}$ sind gleich oder verschieden und bedeuten ein Wasserstoffatom, eine $C_1$-$C_{10}$, vorzugsweise $C_1$-$C_3$-Alkylgruppe, eine $C_1$-$C_{10}$, vorzugsweise $C_1$-$C_3$-Alkoxygruppe, eine $C_6$-$C_{10}$, vorzugsweise $C_6$-$C_8$-Arylgruppe, eine $C_6$-$C_{10}$, vorzugssweise $C_6$-$C_8$-Aryloxigruppe, eine $C_2$-$C_{10}$, vorzugsweise eine $C_2$-$C_4$-Alkenylgruppe, eine $C_7$-$C_{40}$, vorzugsweise $C_7$-$C_{10}$-Arylalkylgruppe, eine $C_7$-$C_{40}$, vorzugsweise $C_7$-$C_{12}$-Alkylarylgruppe, eine $C_8$-$C_{40}$, vorzugsweise $C_8$-$C_{12}$-Arylalkenylgruppe oder ein Halogenatom, vorzugsweise Chlor.

$C_{16}$ und $C_{17}$ sind gleich oder verschieden und bedeuten einen ein- oder mehrkernigen Kohlenwasserstoffrest, welcher mit dem Zentralatom $M^1$ eine Sandwichstruktur bilden kann. Bevorzugt sind $R^{16}$ und $R^{17}$ entweder beide Indenyl oder Tetrahydroindenyl oder $R^{16}$ Fluorenyl und $R^{17}$ Cyclopentadienyl.

$R^{18}$ ist eine ein- oder mehrgliedrige Brücke, welche die Reste $R^{16}$ und $R^{17}$ verknüpft und bedeutet

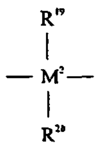 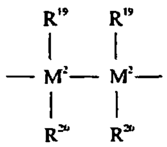 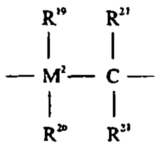 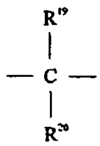 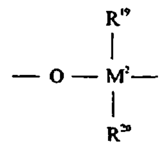 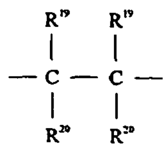

$= BR^{19}$, $= ALR^{19}$, -Ge-, -Sn-, -O-, -S-, = SO, = $SO_2$ = $NR^{19}$, = CO, = $PR^{19}$ oder = $P(O)R^{19}$ ist, wobei $R^{19}$, $R^{20}$ und $R^{21}$ gleich oder verschieden sind und ein Wasserstoffatom, ein Halogenatom, vorzugsweise Chlor, eine $C^1$-$C^{10}$, vorzugsweise $C_1$-$C_3$-Alkylgruppe, insbesondere Methylgruppe, eine $C_1$-$C_{10}$-Fluoralkylgruppe, vorzugsweise $CF_3$-Gruppe, eine $C_6$-$C_{10}$-Fluorarylgruppe, vorzugsweise Pentafluorphenylgruppe, eine $C_6$-$C_{10}$, vorzugsweise $C_6$-$C_8$-Arylgruppe, eine $C_1$-$C_{10}$, vorzugsweise $C_1$-$C_4$-Alkoxygruppe, insbesondere Methoxygruppe, eine $C_2$-$C_{10}$, vorzugsweise $C_2$-$C_4$-Alkenylgruppe, eine $C_7$-$C_{40}$, vorzugsweise $C_7$-$C_{10}$-Arylalkylgruppe, eine $C_8$-$C_{40}$, vorzugsweise $_8$-$C_{12}$-Arylalkenylgruppe oder eine $C_7$-$C_{40}$, vorzugsweise $C_7$-$C_{12}$-Alkylarylgruppe bedeuten, oder $R^{19}$ und $R^{20}$ oder $R^{19}$ und $R^{21}$ bilden jeweils zusammen mit den sie verbindenden Atomen einen Ring.

$M^2$ Silizium, Germanium oder Zinn, bevorzugt Silizium oder Germanium. $R^{18}$ ist vorzugsweise = $R^{19}C^{20}$, = $SiR^{19}R^{20}$, = $GeR^{19}R^{20}$, -O-, -S- , - SO, = $PR^{19}$ oder $P(O)R^{19}$.

Bevorzugt eingesetzte Metallocene sind rac-Dimethylsilyl-bis-(1-indenyl)-zirkondichlorid, rac-Dimethylgermyl-bis-(1-indenyl)-zirkondichlorid, rac-Phenylmethylsilyl-bis-(1-indenyl)-zirkondichlorid,rac-Phenylvinylsilyl-bis-(1-indenyl)-zirkondichlorid, 1-Silycylobutyl-bis-(1'-indenyl)-zirkondichlorid, rac-Ethylen-bis-(1-indenyl)-zirkondichlorid, rac-Diphenyl-bis-(1-indenyl)-hafniumdichlorid, rac-Phenylmethylsilyl-bis-(1-indenyl)-hafniumdichlorid, rac-Dimethylsilyl-bis-(1-indenyl)-hafniumdichlorid, rac-Diphenylsilyl-bis-(1-indenyl)-zirkondichlorid, Diphenylmethylen-(9-fluorenyl)-cyclopentadienyl-zirkondichlorid, Isopropylen-(9-fluorenyl)-cyclopentadienyl-zirkondichlorid oder deren Gemische.

Der Cokatalysator ist ein Aluminoxan der Formel VII für den linearen Typ und/oder der Formel VIII für den

cyclischen Typ. In diesen Formeln bedeuten $R^{13}$ eine $C_1$-$C_6$-Alkylgruppe, vorzugsweise Methyl, Ethyl oder Isobutyl, Butyl oder Neopentyl, oder Phenyl oder Benzyl. Bevorzugt ist Methyl. n ist eine ganze Zahl von 2 bis 50, bevorzugt 50 bis 40. Die exakte Struktur des Aluminoxans ist jedoch nicht bekannt. Die Herstellung des Aluminoxans ist literaturbekannt. Die Konzentration des Aluminoxans in der Lösung liegt in dem Bereich von ca. 1 Gew.-% bis zur Sättigungsgrenze, vorzugsweise von 5-30 Gew.-% jeweils bezogen auf die Gesamtlösung. Das Metallocen kann in der gleichen Konzentration eingesetzt werden, vorzugsweise wird es jedoch in einer Menge von ca. $10^{-4}$-1 mol pro mol Aluminoxan eingesetzt.

Die Polymerisation wird in einem für das Ziegler-Niederdruckverfahren gebräuchlichen inerten Lösungsmittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist benutzt werden. Brauchbar ist auch Toluol.

Schließlich kann auch das zu polymerisierende Monomere als Lösungsmittel oder als Suspensionsmittel eingesetzt werden. Im Falle von Norbonen werden derartige Massepolymerisationen bei einer Temperatur oberhalb 45°C durchgeführt. Die Molmasse des Polymerisats kann in bekannter Weise geregelt werden; vorzugsweise wird dazu Wasserstoff verwendet.

Die Polymerisation wird in Lösung, in Suspension oder in der Gasphase kontinuierlich oder diskontinuierlich ein- oder mehrstufig bei einer Temperatur von -78°C bis 150°C, vorzugsweise -20°C bis 80°C, durchgeführt. Der Druck beträgt 0,5 bis 64 bar und wird entweder durch die gasförmigen Olefine oder mit Hilfe von Inertgas erhalten.

Dabei wird die Metallocenverbindung in einer Konzentration, bezogen auf das Übergangsmetall, von $10^{-3}$ bis $10^{-7}$, vorzugsweise $10^{-5}$ bis $10^{-6}$ mol Übergangsmetall pro $dm^3$ Reaktorvolumen angewendet. Das Aluminoxan wird in einer Konzentration von $10^{-4}$ bis $10^{-1}$, vorzugsweise $10^{-4}$ bis $2 \times 10^{-2}$ mol pro $dm^3$ Reaktorvolumen verwendet, bezogen auf den Gehalt von Aluminium. Um die Polymerisationseigenschaften verschiedener Metallocene zu kombinieren, ist es möglich, Gemische mehrerer Metallocene einzusetzen.

Neben Mischungen aus zwei oder mehr cycloolefinischen Polymeren kann ein erfindungsgemäßes Kunststoffmaterial auch weitere Polymere aufweisen. Die Legierungen (Blends) können in Schmelze oder in Lösung hergestellt werden. Die Legierungen weisen jeweils eine für bestimmte Anwendungen günstige Eigenschaftskombination der Komponenten auf.

Hierbei müssen die weiteren Polymere mit dem cycloolefinischen Polymeren mischbar sein. Mischbar bedeutet im Rahmen der Erfindung, daß hierdurch keine Trübungen auftreten und die Abbezahl der Mischung nicht kleiner als 40 ist.

Zu diesen Polymeren gehören u.a.

Polymere, die durch Polymerisation von Kohlenwasserstoffen mit 1 oder 2 ungesättigten Bindungen erhältlich sind. Hierzu gehören u.a. Polyolefine, wie beispielsweise Polyethylen, Polypropylen, Polyisobutylen, Polymethylbutylen-1, Polyisopren und Polystyrol;

Halogen enthaltende Vinylpolymere, wie beispielsweise Vinylchlorid, Polyvinylidenchlorid, Polyvinylfluorid und Polychloropren;

Polymere, die von α, β-ungesättigten Carbonsäuren oder deren Derivaten abgeleitet sind, wie beispielsweise Polyacrylat, Polymethacrylat, Polyacrylamid und Polyacrylnitril;

Polymere, die von ungesättigten Alkoholen, Aminen, Acylderivaten oder Acetalen abgeleitet sind, wie beispielsweise Polyvinylalkohol, Polyvinylacetat, Polyvinylstearat, Polyvinylbenzoat, Polyvinylmaleat, Polyvinylbutyral, Polyallylphthalat und Polyallylmelamin;

Polymere, die von Epoxiden abgeleitet sind, wie beispielsweise Polyethylenoxid;

Polyacetale, wie beispielsweise Polyoxymethylen, Polyoxyethylen und Polyoxymethylen enthaltende Ethylenoxide;

Polyphenylenoxide;

Polycarbonate;

Polysulfone;

Polyurethane und Urethanharze;

Polyamide und Copolyamide, die von Diaminen und Dicarbonsäuren und/oder Aminocarbonsäuren abgeleitet sind,

wie beispielsweise Nylon 6, Nylon 66, Nylon 11 und Nylon 12; Polyamidpolyether;

Polyester, die von Dicarbonsäuren und Dialkoholen und/oder Hydroxycarbonsäuren oder entsprechenden Lactonen abgeleitet sind, wie beispielsweise Polyethylenterephthalat, Polybutylenterephthalat und Poly-1,4-dimethylolcyclohexanterephthalat.

Die Menge, in der diese Polymere mit den zuvor genannten cycloolefinischen Polymeren gemischt werden können, ist darauf beschränkt, daß hierdurch keine unzulässig hohen Trübungen auftreten. Ohne daß hierdurch eine Einschränkung erfolgen soll, beträgt der Anteil der cycloolefinischen Polymere im Kunststoffkörper mindestens 50 Gew.-%, bevorzugt mindestens 80 Gew.-% und ganz besonders bevorzugt mehr als 95 Gew.-%, bezogen auf die Gesamtmenge der Polymere.

Durch die Zugabe von weiteren Polymeren läßt sich der Brechungsindex verändern. Des weiteren kann hierdurch sowohl die Verarbeitbarkeit als auch die Haltbarkeit der Linsen beeinflußt werden.

Des weiteren können die erfindungsgemäßen Kunststoffe die üblichen Zusatzstoffe enthalten. Hierzu gehören unter anderem Antistatika, Antioxidantien, Entformungsmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher.

Der Zusatz dieser Additive wird unter anderem durch die für ophthalmische Anwendungen notwendige Transparenz beschränkt.

Besonders bevorzugte Zusatzstoffe sind Antioxidationsmittel. Diese Verbindungen sind dem Fachmann an sich geläufig. Beispielhaft für eine Vielzahl in Frage kommender Zusätze dieser Art seien genannt:

Chloranilsäure (2,5-Dichloro-3,6-dihydroxy-1,4 benzochinon, Hydrochinon (1,4-Dihydroxybenzol), Irganox 1330 (1,3,5-Trimethyl-2,4,6-tris-(3,5-di-tert.Butyl-4-hydroxybenzyl)benzol, Vulkanox BHT (2,6-Di-tert.butyl-4-methylphenol), 4-tert-Butylbrenzcatechin, Verbindungen der allgemeinen Formel X)

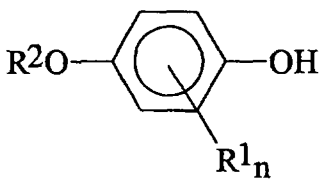

(X)

worin n eine ganze Zahl im Bereich von 1 bis 4 ist, $R^1$ einen substituierten oder unsubstituierten, linearen oder verzweigten Alkylrest mit 1 bis 8 Kohlenstoffatomen, vorzugsweise mit 1 bis 4 Kohlenstoffatomen, einen Arylrest oder Halogen, vorzugsweise Chlor, Fluor oder Brom, bedeutet, und $R^2$ Wasserstoff oder ein substituierter oder unsubstituierter, linearer oder verzweigter Alkylrest mit 1 bis 8 Kohlenstoffatomen, vorzugsweise mit 1 bis 4 Kohlenstoffatomen, ist. Hierzu gehören unter anderem Irganox 1010 (3,5-Bis(1,1-dimethylethyl-2,2-Metrhylenbis-(4-Methyl-6-tert-butyl)phenol), Irganox 1035 (2,2'-Thiodiethylbis-(3-(3,5-di-tert-butyl-4-hydroxyphenyl)propionat),

Irganox 1076 (Octadecyl-3-(3,5-di-tert butyl-4-hydroxyphenyl)propionat,
Topanol O, Cyanox 1790 (Tris-(4-tert.butyl-3-hydroxy-2,6-dimethylbenzyl)-5-triazin-2,4,6-(1H,3H,5H)trion), Irganox 1098 und dergleichen.

Cycloolefinische Homo- und Copolymere umfassende Kunststoffe, die den oben genannten Anforderungen genügen, können des weiteren kommerziell erhalten werden. Handelsüblich sind beispielsweise ®Topas-Sorten, die von Ticona erhältlich sind, sowie ®Zeonor-Typen von Nippon Zeon.

Der Körper aus Kunststoff kann aus den zuvor genannten Polymeren beispielsweise durch Gießverfahren sowie durch Spritzguß hergestellt werden. Hierbei sind Spritzgußverfahren im allgemeinen aufgrund ihrer Wirtschaftlichkeit bevorzugt. Diese Verfahren sind weithin bekannt.

Die erfindungsgemäße ophthalmische Linse weist eine transparente, gegen Korrosion beständige Beschichtung auf, die mindestens zwei Schichten, eine zum Kunststoff hin gewandten inneren Anpaßschicht und eine Fettschutzschicht, umfaßt.

Die Anpaßschicht dient insbesondere zum Versiegeln der porösen Struktur der cycloolefinischen Polymere, wobei eine äußerst glatte Grenzfläche erhalten wird. Wie zuvor erwähnt ist die Porosität von Kunststoffkörpern aus

cycloolefinischen Polymeren für die Trübung verantwortlich, die durch Einwirkung von Fetten oder Lösungsmitteln auftritt. Hierbei muß diese Schicht zumindest transparent sein.

Die Anpaßschicht weist mindestens 5 Gew.-% Kohlenstoff, besonders bevorzugt mindestens 10 Gew.-% Kohlenstoff und ganz besonders bevorzugt mindestens 25 Gew.-% Kohlenstoff, bezogen auf das Gesamtgewicht dieser Schicht, auf. Sie ist mindestens 500 nm, bevorzugt mehr als 600 nm und ganz besonders bevorzugt mehr als 700 nm dick sind.

Als Fettschutzschicht ist erfindungsgemäß jedes Material geeignet, das die erforderlichen Eigenschaften der Transparenz und Festigkeit gegenüber Fetten und Lösungsmitteln aufweist.

Ganz überraschend wurde festgestellt, daß eine Schicht mit einem Kohlenstoffgehalt < 5 %, insbesondere < 3 %, bezogen auf das Gesamtgewicht dieser Schicht, als Fettschutzschicht geeignet ist. Die Schichtdicke der Fettschutzschicht beträgt mindestens 100 nm und ganz besonders bevorzugt mehr als 150 nm. Diese Schicht schützt den Kunststoffkörper sowie die darunterliegende innere Schicht insbesondere vor einer Trübung durch Fetteinwirkung, Schweiß und Reinigungsmitteln.

Die beiden Schichten können direkt aneinander liegen, wobei der Übergang von der Anpaßschicht zur Fettschutzschicht entweder abrupt erfolgen, d.h. es liegen zwei Schichten, beispielsweise mit unterschiedlichem Kohlenstoffgehalt, vor (Stufenfunktion), oder aber über die Schichtdicke als "Gradient" kontinuierlich geführt werden kann, so daß die beiden unterschiedlichen Schichten noch besser miteinander verankert werden können.

Der Gradient kann sich beispielsweise auf den Kohlenstoffgehalt der einzelnen Lagen beziehen, wobei dieser vom Kunststoffkörper nach außen hin abnimmt. Dementsprechend ergibt sich hierbei der zweischichtige Aufbau der Barriereschicht aus dem Kohlenstoffgehalt der beiden äußeren Lagen. Bei diesem Schichtaufbau beziehen sich die zuvor angegebenen, bevorzugten Werte des Kohlenstoffgehaltes auf die beiden äußeren Lagen der sich kontinuierlich ändernden Barriereschicht, ohne daß hierdurch eine Einschränkung erfolgen soll.

Bei Verwendung einer Gradientenschicht kann die Schichtdicke der Sperrschicht leicht gegenüber dem abrupten Übergang reduziert werden.

Des weiteren kann die Beschichtung weitere Schichten aufweisen, die in der Fachwelt an sich bekannt sind. Hierzu gehören unter anderem Antireflexbeschichtungen, Beschichtungen gegen ein Beschlagen der Brillengläser und Kratzschutzschichten.

Die Beschichtung erfindungsgemäßer Linsen, die mindestens eine Anpaßschicht und eine Fettschutzschicht umfaßt, wurde durch ein CVD-Verfahren (Chemical Vapor Deposition) erhalten, wobei sogenannte Plasmaverfahren bevorzugt werden. Hierbei wird im allgemeinen bei reduziertem Druck eine Beschichtung durch Bestrahlung eines zersetzbaren Gases erzeugt. Die Bestrahlung kann sowohl kontinuierlich als auch gepulst erfolgen, wobei letzteres Verfahren, auch PICVD (Plasma-Impuls-CVD) genannt, ganz besonders zweckmäßig ist.

Das PICVD-Verfahren ist beispielsweise in Journal of the ceramic society of Japan, 99 (10), 894-902 (1991) beschrieben, wobei auch die Beschichtung von gewölbten Oberflächen offenbart ist (vgl. WO 95/26427).

Bei den PICVD-Verfahren wird in der Regel bei kontinuierlichem Fluß der Beschichtungsgase die das Plasma anregende elektromagnetische Strahlung gepulst zugeführt, wobei sich bei jedem Impuls eine dünne Schicht (typisch etwa 1 nm, Monolagenbereich) auf das Substrat niederschlägt. Nach jedem Leistungsimpuls folgt eine Impulspause, so daß hohe Beschichtungsgeschwindigkeiten ohne nennenswerte Temperaturbelastung des Substrates möglich sind. Für die Herstellung einer Schicht ist insbesondere die Höhe und Dauer der Leistungsimpulse sowie die Dauer der Impulspause entscheidend. Die Impulshöhe ist bei einem PICVD-Verfahren ein Leistungsmaß. Sie entspricht der Pulsleistung, d. h. dem Produkt aus Generatorspannung und Generatorstrom während der Impulsdauer. Der Anteil der Leistung, der tatsächlich in das Plasma eingekoppelt wird, hängt von einer Reihe von Parametern, z. B. der Dimensionierung des impulsabgebenden Bauteils und des Reaktors ab.

Je nach Impulshöhe werden

a) ab einem Schwellenwert, der für jedes Gas charakteristisch ist, unterschiedliche Anregungen und Reaktionen im Plasma erzeugt,
b) unterschiedliche Dicken der Plasmazone eingestellt.

Bei Anwendung des PICVD-Verfahrens können von Impuls zu Impuls durch entsprechende Wahl der Impulshöhe gezielt lagenweise Elementarschichten (Monolagen) unterschiedlicher Zusammensetzung abgeschieden werden. Dies erfolgt insbesondere durch geeignete Wahl der Impulspause, so daß immer die gleiche Gaszusammensetzung bei jedem Impuls, beispielsweise durch saubere Trennung des Abgases vom Frischgas, vorhanden ist. Beim üblichen PCVD-Verfahren ist ähnliches nicht möglich.

Die nachfolgenden Bereiche der Leistungsparameter sind besonders bevorzugt:

Impulsdauer: 0,01 bis 10 Millisekunden, insbesondere

(fortgesetzt)

| | |
|---|---|
| | 0,1 und 2 Millisekunden; |
| Impulspause: | 1 bis 1000 Millisekunden, insbesondere 5 bis 500 Millisekunden; und |
| Impulshöhe: | 10 bis 100 000 Watt. |

Der PICVD-Prozeß wird mit Wechselspannungsimpulsen einer Frequenz zwischen 50 kHz und 300 Gigaherz durchgeführt, wobei Frequenzen von circa 2,45 Gigaherz besonders bevorzugt sind. Üblicherweise wird unter Anwendung eines Druckes im Bereich von 0,001 bis etwa 10 Millibar, bevorzugt 0,1 bis 2 Millibar beschichtet.

Als Materialien zur Herstellung der Anpaßschicht und der Fettschutzschicht wird einer Gasmischung eingesetzt, die Hexamethylsiloxan (HMDSO) und Sauerstoff enthält So kann man durch Änderung von Leistungsparametern des Plasmaprozesses Schichten erzeugen, die von reinen Siliconharzschichten bis zu reinen $SO_2$-Schichten reichen.

Die Strömungsgeschwindigkeit des Gases wird beim PICVD-Verfahren im allgemeinen so gewählt, daß während des Impulses das Gas als ruhend angesehen werden kann. Dementsprechend liegen die Massenflüsse im allgemeinen im Bereich von 1 bis 200 Standard-$cm^3$/Minute, bevorzugt im Bereich von 5 bis 100 Standard-$cm^3$/Minute.

Die Transparenz erfindungsgemäßer Kunststofflinsen ist durch besonders geringe Trübungswerte gegeben, wie diese gemäß ASTM D 1003 bestimmt werden können.

Darüber hinaus sind die Linsen gegen Korrosion, insbesondere durch Fette, Schweiß und/oder Lösungsmittel, wie sie beispielsweise zur Reinigung der Brillenlinsen verwendet werden, resistent. Dies kann beispielsweise dadurch bestimmt werden, daß man die optischen Linsen für ca. 30 Minuten in Cyclohexan legt.

Diese Eigenschaften der Linse ermöglichen, daß die Linsen in Bereichen eingesetzt werden können, bei denen sie einer starken Lösungsmittelbelastung ausgesetzt werden, wie dies beispielsweise bei Brillen der Fall ist.

Die Kunststofflinsen können des weiteren eingefärbt werden, um beispielsweise Sonnenbrillengläser zu erhalten.

Die erfindungsgemäßen Kunststofflinsen weisen vorzugsweise einen Brechungsindex größer als 1,49, insbesondere größer 1,52 auf.

Die Abbezahl der Linsen ist bevorzugt größer als 40, besonders bevorzugt größer als 50 und ganz besonders bevorzugt größer als 55.

Die Abbezahl dient zur Kennzeichnung der Dispersion eines optischen Mediums. Sie berechnet sich aus

$$\nu_D = (n_E - 1)/(n_F - n_C),$$

wobei $n_E$, $n_F$ und $n_C$ die Brechzahlen des Mediums bei den Fraunhoferschen E-, F- und C-Linien sind. Dabei ist E die grüne Hg-Linie mit $\lambda$ = 546,1 nm, F die blaue Cadmium-Linie mit $\lambda$ = 643,8 nm und C die rote Cadmium-Linie $\lambda$ = 480,0 nm. Eine große Abbesche Zahl bedeutet eine geringe Dispersion.

Die Dichte der beschichteten Kunststofflinse ist im allgemeinen kleiner als 1,5 g/$cm^3$, bevorzugt kleiner als 1,3 g/$cm^3$ und besonders bevorzugt kleiner als 1,1 g/$cm^3$, ohne daß die zuvor genannten technischen Angaben, wie die Abbezahl oder der Brechungsindex, eine beschränkende Wirkung haben sollen.

Die folgenden Beispiele und Vergleichsbeispiele dienen zur detaillierten Beschreibung der vorliegenden Erfindung, ohne daß hierdurch eine Einschränkung erfolgen soll.

Beispiel 1

Eine Linse wurden aus ®TOPAS 5013 der Ticona GmbH, Frankfurt, durch Spritzguß hergestellt. Dieses Substrat wurde durch PICVD mit zwei Schichten versehen. Hierbei wurden folgende Parameter verwendet:

| | |
|---|---|
| Frequenz: | 2,54 GHz |
| Impulspause: | 90 ms |
| Impulsdauer: | 1 ms |
| Impulshöhe: | 45% des Maximalwertes eines 6 kW-Magnetrons |
| Prozeßdruck: | 0,3 mbar |
| Substrattemperatur: | 30°C |

Die erste Schicht (Anpaßschicht) wurde erhalten bei einem $O_2$-Massenfluß von 100 Standard-$cm^3$/min und einem HMDSO-Massenfluß von 30 Standard-$cm^3$/min. Es wurde eine Schichtdicke von 600 nm erzeugt.

Die zweite Schicht (Fettschutzschicht) wurde erhalten bei einem $O_2$-Massenfluß von 100 Standard-$cm^3$/min und einem HMDSO-Massenfluß von 10 Standard-$cm^3$/min. Es wurde eine Schichtdicke von 300 nm erzeugt.

Das so erhaltene Substrat wurde anschließend mit Cyclohexan auf Korrosionsbeständigkeit geprüft. Hierbei wurde die Linse in ein mit Cyclohexan gefülltes Becherglas gegeben. Nach 30 Minuten wurde die Linse entnommen und getrocknet.

Die Trübung wurde bestimmt indem die beschichtete Linse mit einer unbeschichteten Linse visuell verglichen wurde. Hierbei wurde die Linse vor einem weißen Papier mit Hilfe einer Lampe untersucht. Darüber hinaus zeigte die beschichtete Linse auch keine Interferenzstreifen, wie dies mit einer Waldmannlampe ermittelt wurde.

Es zeigte sich, daß die beschichtete Linsen auch nach Einwirkung von Hexan keine Trübungen aufwies.

Vergleichsbeispiel 1

Eine aus ®TOPAS 5013 hergestellte Linse wurde mit Lack beschichtet, indem diese in eine handelsübliche Mischung getaucht wurde. Die Beschichtung wies eine Dicke von ca. 1 $\mu$m auf.

Es wurde festgestellt, daß das Substrat zwar fettbeständig ist, aber die Transparenz des Materials nicht den Anforderungen genügt, da die mit dem Tauchverfahren beschichtete Linse starke Trübungen im visuellen Vergleich zu dem unbeschichteten Material zeigt.

Vergleichsbeispiel 2

Eine aus ®TOPAS 5013 hergestellte Linse wurde mit reaktivem Silikon silanisiert, wobei eine Schichtdicke von ca. 10 $\mu$m erhalten wurde. Das so erhaltene Substrat wies erkennbare Trübungen auf und ist daher zur Herstellung von Brillenlinsen nicht geeignet.

Vergleichsbeispiel 3

Eine aus ®TOPAS 5013 hergestellte Linse wurde mit Silber metallisiert, wobei die Schichtdicke 400 nm betrug. Es wurde festgestellt, daß das Substrat zwar fettbeständig ist, aber die Transparenz des Materials nicht den Anforderungen genügt.

Vergleichsbeispiel 4

Eine aus ®TOPAS 5013 hergestellte Linse wurde mit Gold metallisiert, wobei die Schichtdicke 400 nm betrug. Es wurde festgestellt, daß das Substrat zwar fettbeständig ist, aber die Transparenz des Materials nicht den Anforderungen genügt.

Beispiel 2

Eine aus ®TOPAS 5013 hergestellte Linse wurde mit einem Plasma-CVD Verfahren beschichtet, wobei die Leistung im Gegensatz zum Beispiel 1 nicht gepulst sondern kontinuierlich durch Bestrahlung mit einer Frequenz von 13,56 MHz zugeführt wurde. Die eingesetzte Leistung wurde so gewählt, daß diese der in Beispiel 1 eingekoppelten Leistung entsprach. Die restlichen Parameter, wie Druck, Temperatur und Massenflüsse der Gase entsprachen den in Beispiel 1 gewählten Werten, wobei zwei Schichten, d.h. eine 600 nm dicke Anpaßschicht und eine 300 nm dicke Fettschutzschicht, erzeugt wurden.

Das so erhaltene Substrat wurde anschließend mit Cyclohexan auf Korrosionsbeständigkeit geprüft.

Es zeigte sich, daß das zur Herstellung von Linsen geeignete Substrat auch nach 30minütiger Einwirkung von Hexan keine Trübungen aufwies.

**Patentansprüche**

1. Optische Linse mit einem Körper aus Kunststoff, insbesondere für Brillengläser,
**dadurch gekennzeichnet, dass** der Kunststoff cycloolefinische Polymere umfasst und der Kunststoffkörper mit einer transparenten gegen Korrosion beständigen Beschichtung überzogen ist, die mindestens zwei Schichten, nämlich eine zum Kunststoff hin gewandte innere Anpassschicht und eine Fettschutzschicht, aufweist, **dadurch gekennzeichnet, dass**

■ die Anpassschicht direkt auf dem Kunststoffkörper angeordnet ist,
■ die Anpassschicht eine Dicke von mindestens 500 nm aufweist,
■ die Fettschutzschicht eine Dicke von mindestens 100 nm aufweist,
■ die Fettschutzschicht $SiO_2$-Einheiten und ggf. Silikonharzeinheiten umfasst und einen Kohlenstoffgehalt kleiner 5 Gew. % aufweist,
■ die Anpassschicht Silikonharzeinheiten und ggf. $SiO_2$-Einheiten umfasst und mindestens 5 Gew. % Kohlenstoff aufweist,
■ wobei die Fettschutzschicht und die Anpassschicht durch ein CVD-Verfahren erhalten wurden, bei welchem man eine Mischung aus Hexamethyldisiloxan und Sauerstoff zur Beschichtung einsetzt.

**2.** Linse gemäß Anspruch 1, **dadurch gekennzeichnet, dass** der Brechungsindex größer 1,49, insbesondere größer 1,52 ist.

**3.** Linse gemäß Anspruch 1 oder 2, **dadurch gekennzeichnet, dass** die Abbezahl größer als 50 ist.

**4.** Verfahren zur Herstellung einer Linse gemäß einem oder mehreren der vorhergehenden Ansprüche, **dadurch gekennzeichnet, dass** man die Beschichtung durch ein Plasma-Impuls-CVD-Verfahren aufbringt.

## Claims

**1.** Optical lens with a body of plastic, in particular for glasses for spectacles, **characterized in that**
the plastic comprises cycloolefinic polymers and the plastic body is coated with a transparent coating resistant to corrosion which exhibits at least two layers namely one inner adapting layer facing the plastic and one grease protection layer **characterized in that**

- the adapting layer lies directly on the plastic body
- the adapting layer has a thickness of at least 500 nm
- the grease protection layer has a thickness of at least 100 nm
- the grease protection layer comprises $SiO_2$-unities and optional silicone resin-unities and exhibits a carbon content of less than 5 % by weight
- and the adapting layer comprises silicone resin-unities and optionally $SiO_2$- unities and exhibits a carbon content of at least 5 % by weight whereby the grease protection layer and the adapting layer were obtained by a CVD-process where a mixture of hexamethyldisiloxane and oxygen is used for the coating.

**2.** A lens according to claim 1 **characterized in that** the refractive index is greater than 1,49 in particular greater than 1,52.

**3.** Lens according to claim 1 or 2 **characterized in that** the Abbe number is greater than 50.

**4.** Process for the preparation of a lens according to one or more of the preceding claims **characterized in that** the coating is applied by a plasma-pulse-CVD-process.

## Revendications

**1.** Lentille optique avec un corps de matière plastique en particulier pour des verres de lunettes
**caractérisée en ce que** la matière plastique comprend des polymères cyclooléfeniques et le corps de matière plastique est enduit d'un recouvrement transparent résistant à la corrosion qui possède au moins deux couches à savoir une couche intérieur d'adaption qui est adjacente à la matière plastique et une couche de protection contre la graisse
**caractérisée en ce que**

- la couche de protection est placée directement sur le corps de matière plastique
- la couche d'adaption possède une épaisseur d'au moins 500 nm
- la couche de protection contre la graisse possède une épaisseur d'au moins 100 nm
- la couche de protection contre la graisse comprend des unités $SiO_2$ et à l'occasion des unités des résines de silicones et une teneur de carbone plus petite que 5 % de poids

- la couche d'adaption comprend des unités de résine de silicones et à l'occasion des unités de $SiO_2$ et au moins de 5 % de poids de carbone
- où la couche de protection contre la graisse et la couche d'adaption sont obtenues par un procédé CVD, où l'on utilise un mélange d'hexamethyldisiloxane et oxygène pour le recouvrement.

2. Lentille selon la revendication 1 **caractérisée en ce que** l'indice de réfraction est plus grand que 1,49 en particulier plus grand que 1,52.

3. Lentille selon la revendication 1 ou 2 **caractérisée en ce que** le nombre Abbe est plus grand que 50.

4. Procédé de préparation d'une lentille selon une ou plusieurs des revendications précédentes **caractérisé en ce que** l'on dépose le recouvrement par un procédé de plasma-impulsion-CVD.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 047870 A2
- EP 0485893 A1
- EP 0610851 B1
- JP 90009619 B
- EP 682061 A
- JP 47011818 A
- JP 58043412 A
- JP 61001442 A
- JP 62019761 A
- JP 50075700 A
- JP 55129434 A
- JP 58127728 A
- JP 60168708 A
- JP 61271308 A
- JP 63221118 A
- JP 2180976 A
- EP 06610851 A
- EP 06485893 A
- EP 06407870 A
- EP 06688801 A
- WO 9526427 A


### In der Beschreibung aufgeführte Nicht-Patentliteratur


- **T. Jarratt.** *Optical World,* 10-27
- *Optical World,* Mai 1998, 10-23
- **A. Asseraf.** *Optical World,* November 1997, 12-15
- **Richard Chaffin.** *Optical World,* Februar 1997, 35-38
- **H. Domininghaus.** *Die Kunststoffe und ihre Eigenschaften,* 1992, 162
- *Journal of the ceramic society of Japan,* 1991, vol. 99 (10), 894-902